# FASCICULE DE BREVET EUROPEEN

(11) **EP 0 633 413 B1**
(45) Date de publication et mention de la délivrance du brevet: **08.10.1997**
(21) Numéro de dépôt: 94401540.3
(22) Date de dépôt: 05.07.1994
(51) Int. Cl.: F16J 15/02

(54) **Joint de matière hydrogonflante**
Abdichtung aus wasserschwellendem Material
Sealing of water-swelling material

(30) Priorité: 09.07.1993 FR 9308460
(43) Date de publication de la demande: 11.01.1995
(73) Titulaire: HUTCHINSON, F-75008 Paris (FR)
(72) Inventeur: Suchet, Michel, F-45200 Montargis (FR); Levassort, Didier, F-45200 Amilly (FR)
(74) Mandataire: Ramey, Daniel

(56) Documents cités:
- EP-A- 0 522 481
- US-A- 4 546 033
- US-A- 5 172 919

## Description

L'invention concerne des joints ou garnitures de matière hydrogonflante, tels par exemple que des joints de voussoir ou de reprise de béton.

Ces joints ont l'avantage d'assurer une étanchéité par gonflement en présence d'eau, mais ont pour inconvénients de perdre leurs caractéristiques mécaniques lorsqu'ils sont imprégnés d'eau et d'être extrêmement fragiles à l'agrafage ou au clouage.

Par le document EP-A-0 522 481, on connaît un revêtement destiné à être posé sur le sol pour supporter une membrane imperméable, ce revêtement comprenant une couche intermédiaire de support en matière géocompatible à résistance mécanique élevée, telle qu'une étoffe tissée ou non-tissée, et deux couches de matière hydrogonflante telle que de la bentonite sodique ou calcique placées de part et d'autre de la couche intermédiaire de support. Un tel revêtement ne peut servir de joint d'étanchéité.

Par le document US-A-5,172,919, on connaît un joint d'étanchéité, tel qu'un joint de voussoir, réalisé essentiellement en matière hydrogonflante et comprenant une bande étroite de caoutchouc non hydrogonflant sur sa face appliquée sur un support, cette bande de caoutchouc permettant d'améliorer le collage du joint sur le support, sans pour autant éviter les inconvénients précités des joints connus.

La présente invention a notamment pour but d'éviter ou au moins de réduire ces inconvénients.

Elle a pour objet un joint en matière hydrogonflante, qui conserve une tenue satisfaisante au clouage ou à l'agrafage et qui ait une stabilité dimensionnelle meilleure et un prix de revient plus faible que dans la technique antérieure.

Elle propose à cet effet un joint d'étanchéité en matière hydrogonflante, tel par exemple qu'un joint de voussoir ou de reprise de béton, caractérisé en ce qu'il comprend une âme constituée d'une nappe ou feuille de matière sensiblement inextensible disposée dans une couche de support en caoutchouc naturel ou synthétique non hydrogonflant.

Dans un mode de réalisation préféré de l'invention, cette nappe ou feuille de matière inextensible est en matière textile, par exemple telle qu'un tissu à mailles larges ou serrées.

Un tel joint a une meilleure stabilité dimensionnelle et une meilleure tenue au clouage ou à l'agrafage que les joints correspondants de la technique antérieure.

Il a également un prix de revient plus faible, résultant de la présence de l'âme réalisée en matière moins onéreuse que les couches superficielles de matière hydrogonflante.

Ce joint peut être réalisé par calandrage à chaud, puis vulcanisation de couches superposées de matière hydrogonflante, de matière non hydrogonflante et d'une nappe ou feuille de matière non extensible.

En variante, ce joint peut également être réalisé par co-extrusion de matière hydrogonflante et de matière non hydrogonflante.

L'invention sera mieux comprise et d'autres caractéristiques, détails et avantages de celle-ci apparaitront plus clairement à la lecture de la description qui suit, faite à titre d'exemple en référence aux dessins annexés dans lesquels :
la figure 1 est une vue schématique en perspective et en coupe d'un joint selon l'invention;
la figure 2 représente schématiquement les étapes essentielles de la fabrication de ce joint.

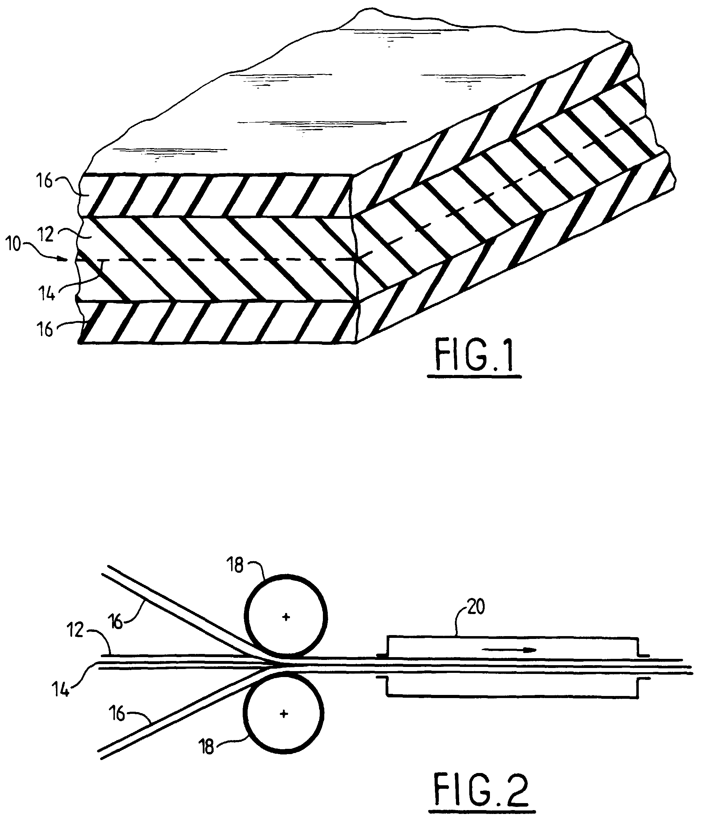

Le joint représenté en figure 1 comprend essentiellement une âme 10 formée d'une couche 12 de caoutchouc compact naturel ou synthétique et d'une nappe ou feuille 14 d'une matière textile telle qu'un tissu à mailles larges ou serrées, réalisé par exemple en polyester ou en coton.

Cette âme 10 comprend sur au moins une et de préférence sur ses deux grandes faces une couche superficielle 16 d'une matière hydrogonflante, telle par exemple qu'un caoutchouc compact naturel ou synthétique contenant un agent gonflant approprié.

Par exemple, les couches superficielles 16 de matière hydrogonflante peuvent avoir une épaisseur de l'ordre de 2 mm, tandis que l'âme 10 a une épaisseur de 6 mm environ.

Comme on le voit bien sur le dessin, la nappe ou feuille 14 de matière textile s'étend sur toute la largeur et sur toute la longueur du joint, et se trouve sensiblement au milieu de la couche 12 de matière non hydrogonflante.

Ce joint à structure laminaire présente l'avantage d'une meilleure stabilité dimensionnelle en longueur et en largeur pendant le gonflement des couches superficielles 16, d'avoir une tenue satisfaisante au clouage ou à l'agrafage grâce à la présence de la nappe ou feuille 14 de matière textile, et d'avoir un prix de revient inférieur à celui d'un joint comparable de la technique antérieure, en raison de la présence de l'âme 10 qui est réalisée en matière moins coûteuse que celle des couches superficielles 16.

Ce joint peut être réalisé par calandrage comme représenté schématiquement en figure 2 où l'on voit les différentes couches 12 et 16 et la nappe 14 de matière textile guidées entre des rouleaux 18 de calandrage permettant la mise en épaisseur de l'ensemble, et des moyens appropriés 20 de vulcanisation qui sont placés en aval des rouleaux 28 de calandrage par rapport au sens de passage du joint.

On peut ainsi notamment réaliser des garnitures qui ont une largeur de l'ordre du mètre ou davantage, et une longueur de plusieurs dizaines de mètres.

En variante, le joint ou la garniture selon l'invention peut être réalisé par co-extrusion de la couche 12 de caoutchouc ou d'élastomère non hydrogonflant et des couches superficielles de caoutchouc ou d'élastomère hydrogonflant, avec une amenée centrale de la nappe textile 14.

## Revendications

1. Joint d'étanchéité en matière hydrogonflante, tel par exemple qu'un joint de voussoir ou de reprise de béton, caractérisé en ce qu'il comprend une âme (10) constituée d'une nappe ou feuille (14) de matière sensiblement inextensible disposée dans une couche (12) de support en caoutchouc naturel ou synthétique non hydrogonflant.

2. Joint selon la revendication 1, caractérisé en ce que ladite âme (10) est revêtue d'une couche superficielle (16) de matière hydrogonflante sur au moins une et de préférence sur chacune de ses deux faces.

3. Joint selon la revendication 1 ou 2, caractérisé en que ladite nappe ou feuille (14) de matière inextensible est en matière textile.

4. Joint selon la revendication 3, caractérisé en ce que ladite nappe ou feuille de matière inextensible est un tissu à mailles larges ou serrées, par exemple de polyester ou de coton.

5. Joint selon l'une des revendications précédentes, caractérisé en ce qu'il est réalisé par calandrage à chaud, puis par vulcanisation de couches superposées (16, 12) de matière hydrogonflante et de matière non hydrogonflante et d'une nappe ou feuille (14) de matière non extensible.

6. Joint selon l'une des revendications 1 à 4, caractérisé en ce qu'il est réalisé par co-extrusion.

## Patentansprüche

1. Dichtung aus wasserschwellbarem Material, wie z.B. eine Dichtung für Gewölbestein oder für die Ausbesserung von Beton, dadurch **gekennzeicnnet**, daß sie eine Seele bzw. Einlage (10) umfaßt, die von einer Schicht oder Folie (14) aus im wesentlichen nichtdehnbarem Material gebildet ist, welche in einer Trägerschicht (12) aus nichtwasserschwellbarem synthetischen oder natürlichen Kautschuk angeordnet ist.

2. Dichtung gemäß Anspruch 1, dadurch **gekennzeichnet**, daß die Seele bzw. Einlage (10) mit einer Oberflächenschicht (16) aus wasserschwellbarem Material auf wenigstens einer und vorzugsweise auf jeder ihrer beiden Seiten versehen bzw. überzogen ist

3. Dichtung gemäß Anspruch 1 oder 2, dadurch **gekennzeichnet**, daß die Schicht oder Folie (14) aus nichtdehnbarem Material aus Textilmaterial ist.

4. Dichtung gemäß Anspruch 3, dadurch **gekennzeichnet**, daß die Schicht oder Folie aus nichtdehnbarem Material ein Gewebe bzw. Gewirk mit großen oder dichtgedrängten Maschen ist, z.B. aus Polyester oder Baumwolle.

5. Dichtung gemäß einem der vorhergehenden Ansprüche, dadurch **gekennzeichnet**, daß sie durch Heißkalandrierung, danach durch Vulkanisation von überlagerten Schichten (16, 12) aus wasserschwellbarem Material und aus nichtwasserschwellbarem Material und einer Schicht oder Folie (14) aus nichtdehnbarem Material hergestellt ist.

6. Dichtung gemäß einem der Ansprüche 1 bis 4, dadurch **gekennzeichnet**, daß sie durch Koextrusion hergestellt ist.

## Claims

1. A sealing gasket of water-swelling material, such as a gasket for a tunnel-lining voussoir segment or for repairing concrete, the gasket being characterized in that it comprises a core (10) made of a sheet (14) of substantially inextensible material disposed in a support layer of non-water-swelling natural or synthetic rubber.

2. A gasket according to claim 1, characterized in that said core (10) is coated with a surface layer (16) of water-swelling material on at least one of its faces, and preferably on both of them.

3. A gasket according to claim 1 or 2, characterized in that said sheet (14) of inextensible material is a textile material.

4. A gasket according to claim 3, characterized in that said sheet of inextensible material is a close- or wide-meshed woven cloth, e.g. of polyester or of cotton.

5. A gasket according to any preceding claim, characterized in that it is made by hot calendaring, followed by vulcanizing superposed layers (16, 12) of water-swelling material and of non-water-swelling material, and a sheet (14) of non-extensible material.

6. A gasket according to any one of claims 1 to 4, characterized in that it is made by co-extrusion.
